# EUROPEAN PATENT SPECIFICATION

(11) **EP 4 253 784 B1**
(45) Date of publication and mention of the grant of the patent: **19.11.2025**
(21) Application number: 22461530.2
(22) Date of filing: 28.03.2022
(51) Int. Cl.: F16D 55/24, F16D 65/78, F16D 65/84, F16D 65/02

(54) **WHEEL AND BRAKE ASSEMBLY**
RAD- UND BREMSANORDNUNG
ENSEMBLE ROUE ET FREIN

(43) Date of publication of application: 04.10.2023
(73) Proprietor: UTC Aerospace Systems Wroclaw Sp. z o.o., 51-317 Wroclaw (PL); Goodrich Corporation, Charlotte, NC 28217 (US)
(72) Inventor: STRAS, Karol, 51-317 Wroclaw (PL); WYSZOWSKI, Adam, 51-317 Wroclaw (PL); MAY, William, Charlotte, NC 28217 (US); LEIVA LAM, Orly, Charlotte, NC 28217 (US); SHU, Michael, Charlotte, NC 28217 (US); DICKEL, Jacob, Charlotte, NC 28217 (US); KOSIBA, Dominik, 51-317 Wroclaw (PL)
(74) Representative: Dehns

(56) References cited:
- EP-A1- 0 499 192
- DE-A1- 102018 121 330
- KR-U- 950 025 366
- US-A- 2 407 197
- US-A- 5 507 370

## Description

### TECHNICAL FIELD

The present disclosure is concerned with wheel and brake assemblies especially, but not exclusively, for vehicles e.g. aircraft.

### BACKGROUND

Wheel and brake assemblies, e.g. in aircraft, typically comprise a number of relatively rotating parts and parts that come into frictional engagement during braking which results in generation of heat at certain locations within the system. The locations where heat is generated, and to which heat is transferred, will suffer wear and possibly failure due to the heat. This results in certain parts of the assembly needing to be replaced while other parts of the assembly are still in good working condition. The life of the overall assembly, though, is usually dictated by the life of the first parts to fail or to be worn to a predetermined degree, after which the entire assembly usually needs to be replaced. Wheel and brake assemblies are disclosed in EP 0 499 192 A1, US 5 507 370 A, US 2 407 197 A, DE 10 2018 121330 A1 and KR 950 025 366 U.

There is, therefore, a need to enable better heat distribution across the parts of the assembly.

### SUMMARY

According to this invention, there is provided a wheel and brake assembly comprising: a stator; a rotating assembly mounted around and rotatable relative to the stator about an axis A; a torque tube in fixed engagement with the stator; a stack of brake disks mounted about the torque tube, the stack of brake disks comprising alternate rotor disks and stator disks, the stator disks attached to the torque tube and the rotor disks attached to the rotating assembly; a brake actuator configured to, in response to a brake command, apply a pressing force on the stack of brake disks to cause frictional engagement between the rotor disks and the stator disks such that the stator disks limit rotation of the rotor disks and, hence the rotating assembly, relative to the torque tube; wherein the stator disks are attached to the torque tube by means of a plurality of splines around the torque tube and a plurality of recesses in the stator disks in which the splines engage; wherein the rotor disks are attached to the rotating assembly by means of a plurality of torque bars extending radially inwards from the rotor and a plurality of recesses in the rotor disks with which the torque bars engage; and wherein at least one or more of the plurality of torque bars or one or more of the plurality of splines has a cavity formed therein and wherein metallic sodium is provided in the cavity.

The cavity may be provided in one or more of the splines and/or one or more of the torque bars.

The assembly may also have a heat shield between the stator and the rotating assembly and the sodium may be incorporated into the heat shield.

The assembly may be an aircraft wheel and brake assembly where the stator is part of the landing gear and the rotating assembly is the wheel assembly.

### BRIEF DESCRIPTION

Examples of an assembly according to the invention will now be described by way of example only with reference to the drawings. It should be noted that variations are possible within the scope of the claims.
Figures 1A and 1B show a wheel and brake assembly to which the teaching of the present invention may be applied. Figure 1A shows the wheel; Figure 1B shows the brake parts.
Figure 2 is a cross sectional view of a torque tube spline to which the teaching of the invention may be applied.
Figure 3 is a cross sectional view of a torque bar to which the teaching of the invention may be applied.

### DETAILED DESCRIPTION

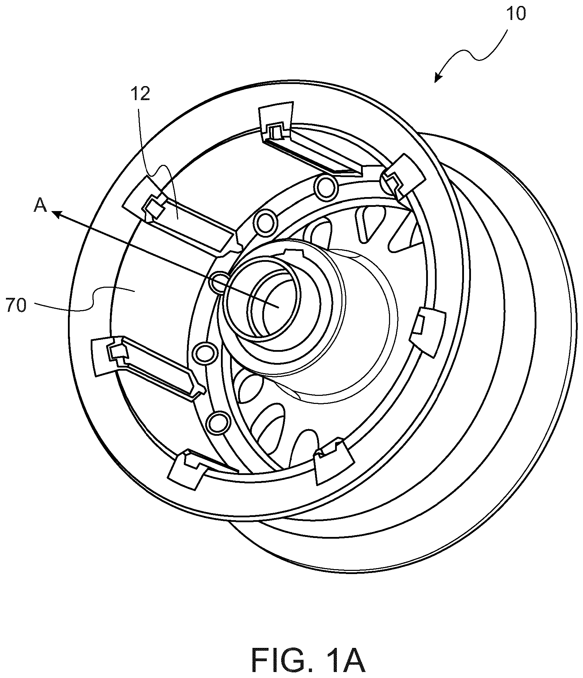

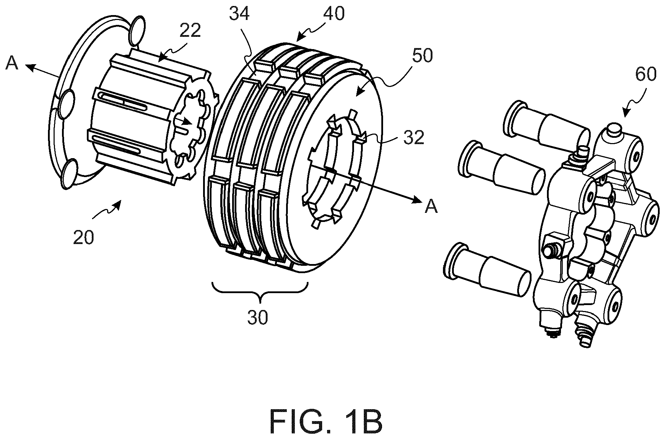

A typical wheel and brake assembly will first be described, by way of background, and with reference to Figs. 1A and 1B. It should be noted that this is just one example of a wheel and brake assembly to which the teachings of the disclosure may be applied.

A wheel and brake assembly typical includes a stator, or stationary (non-rotating) part and a rotating assembly, which rotates relative to the stator. In an aircraft wheel and brake assembly, for example, the rotating assembly may include the wheel 10 and the stator may be a fixed axle, such as the landing gear axle. A torque tube 20 is provided in fixed engagement with the stator. The brake assembly comprises a number of brake plates or disks, together forming a heat sink 30, arranged along the axis of the torque tube. The brake disks form a brake stack of alternate rotor disks 40 and stator disks 50. The stator disks are fixed to the torque tube 20 (and, hence, the stator) by means of splines 22 provided on the torque tube that engage in recesses 32 formed around the inner perimeter of the stator disks. The rotor disks engage with torque bars 12 provided around the inner surface of the wheel, where the torque bars 12 work as splines that engage with recesses 34 provided around the outer perimeter of the rotor disks.

To cause braking of the wheel - i.e. to decelerate rotation or stop rotation of the wheel - a brake actuator 60 causes the stack of brake disks to be pressed together in the axial direction. The compression of the disks means that each rotor disk 40 is tightly held between two adjacent stator disks 50 and the frictional force prevents the rotor disks, and hence the wheel 10 to which they are connected via the torque bars 12,from rotating.

Often, wheel and brake assemblies are provided with a heat shield 70 around the interior of the wheel. The main purpose of the heat shield is to offer resistance to radiation and convection heat transfer to the wheel.

Even with the presence of a heat shield, however, there are certain locations within the wheel assembly where a greater amount of heat will be transferred and these can result in hotspots where there is a greater degree of wear and/or risk of damage to the parts. Such hotspots can arise, for example, at or around the locations of spline engagement between the brake disks and the torque bar/drive inserts.

According to the present invention, heat distribution within the assembly is improved using metallic sodium provided in cavities formed at pertinent locations within the assembly as will be described further below.

The use of metallic sodium is known in other applications, particularly in the automotive field. For example, metallic sodium is often incorporated into valve parts in car engines. Metallic sodium is highly conductive compared to materials commonly used for valve components, and in its liquid phase, sodium has a thermal conductivity similar to aluminium. Sodium phase-changes to liquid at a temperature of around 212 deg. F. (100 deg C). In one example, a valve interior may be filled up to around 60% of its volume with liquid metallic sodium. The head of the valve will usually be relatively hot creating a high temperature gradient. When the body of the valve contains the sodium, the temperature is equalised across the valve part and heat transfer between the engine parts is increased. The valve is in constant motion and there is, therefore, constant heat exchange between the hot and the cold part of the valve, improving the overall heat distribution along the entire valve part.

In the present invention, the properties of metallic sodium are used to advantage in wheel and brake assemblies to improve heat distribution in the assembly. Wheel and brake parts such as the torque tube are often made of materials such as titanium (e.g. Ti 6-4) that have a lower thermal conductivity. The downside of such materials is that they provide relatively poor heat exchange between the assembly parts. The high thermal conductivity of liquid sodium has been found by the inventors to increase heat exchange between parts of the wheel and brake assembly when incorporated into wheel and brake assembly parts that are formed of other, less thermally conductive materials.

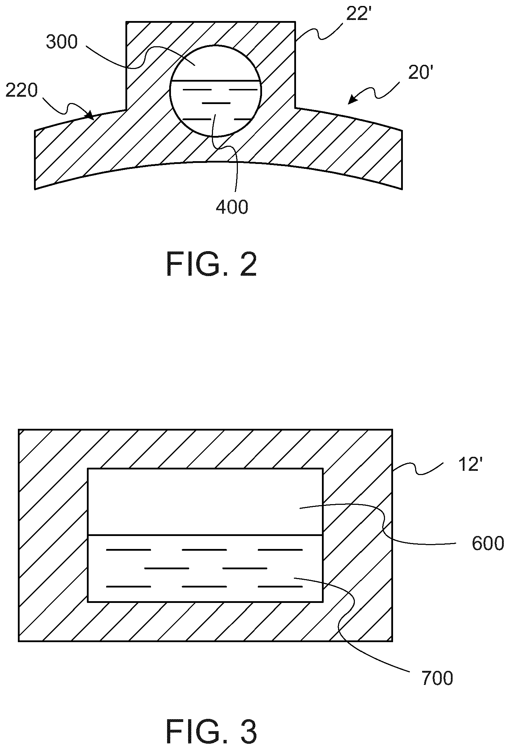

In one example, liquid sodium could be incorporated into the spline of the torque tube as shown, for example, in Fig. 2. In this example, the torque tube 20' is provided with splines 22' extending radially outwards from its outer periphery 220. Figure 2 shows only a part of the torque tube 20' with one spline 22', but the torque tube 20' would actually be provided with several splines distributed around its periphery. As mentioned above, and as is conventional, the splines engage with recesses 32 formed around the circumference of the stator disks in the brake stack to fix the stator disks against rotation relative to the torque tube.

Generally, the torque tube, being a stationary part, will only experience vibrations, but these will give sufficient torque tube displacements to distribute liquid metallic sodium inside the cavity 300.

In this example, the temperature can be equalised by forming a cavity 300 in the spline 22' extending along the length of the torque tube 20'. Metallic sodium 400 is provided in the cavity. At temperatures around or above 100 deg. C, the sodium will change to liquid and, as mentioned above, the relatively high thermal conduction properties of the liquid sodium will result in greater heat exchange between the assembly parts and improved heat distribution.

Providing the sodium in the torque tube splines 22' is just one example of how and where metallic sodium can be advantageously used in a wheel and brake assembly.

Another example is shown in Fig. 3. Here, the sodium is incorporated in one or more of the torque bars that provide engagement between the rotating assembly (wheel) and the rotor disks. Fig. 3 is a cross-section of one torque bar 12', which is substantially rectangular (although other shapes are also possible). A cavity 600 is provided along the interior length of the drive bar. The cavity may have substantially the same cross-sectional shape as the drive bar or could have a different (e.g. circular) cross-sectional shape. Metallic sodium 700 is provided in the cavity.

It is envisaged that only the torque tube splines are modified to include metallic sodium, or only the drive bars, or both. It could also be envisaged that only some of the splines and/or some of the drive bars are modified to incorporate metallic sodium.

In another example, not shown, metallic sodium could be incorporated into the heat shield. Heat shields can take various forms and are provided between the heat sink and the wheel to protect the wheel from radiation and convection heat flow. For example, heat shields are often formed by arcuate panels provided within the wheel.

According to embodiments, metallic sodium could, for example, be incorporated in the heat shield.

By incorporating metallic sodium into parts of the wheel and brake assembly, the temperature of the assembly could be reduced or at least equalised. If the temperature is more equally distributed, there is less stress on the components due to thermal expansion at certain locations.

## Claims

1. A wheel and brake assembly comprising:
a stator;
a rotating assembly (40) mounted around and rotatable relative to the stator about an axis A;
a torque tube (20) in fixed engagement with the stator;
a stack of brake disks mounted about the torque tube, the stack of brake disks comprising alternate rotor disks (40) and stator disks (50), the stator disks attached to the torque tube and the rotor disks attached to the rotating assembly;
a brake actuator (60) configured to, in response to a brake command, apply a pressing force on the stack of brake disks to cause frictional engagement between the rotor disks and the stator disks such that the stator disks limit rotation of the rotor disks and, hence the rotating assembly, relative to the torque tube;
wherein the stator disks (50) are attached to the torque tube by means of a plurality of splines (22) around the torque tube and a plurality of recesses (32) in the stator disks in which the splines engage;
wherein the rotor disks (40) are attached to the rotating assembly (10) by means of a plurality of torque bars (12) extending radially inwards from the rotating assembly and a plurality of recesses (34) in the rotor disks with which the torque bars engage; and **characterised in that**
at least one or more of the plurality of torque bars or one or more of the plurality of splines has a cavity formed therein and wherein metallic sodium is provided in the cavity.

2. The assembly of claim 1, further comprising a heat shield provided between the stator and the rotating assembly.

3. The assembly of claim 2, wherein metallic sodium is provided in a cavity in the heat shield.

4. The assembly of any preceding claim, wherein each of the plurality of torque bars (12') is provided with a cavity (600) in which metallic sodium (700) is provided.

5. The assembly of any of claims 1 to 3, wherein one or some of the plurality of torque bars (12') are not provided with a cavity (600).

6. The assembly of any preceding claim, wherein each of the plurality of splines (22') is provided with a cavity (300) in which metallic sodium (400) is provided.

7. The assembly of any of claims 1 to 5, in which one or some of the splines are not provided with a cavity.

8. The assembly as claimed in any preceding claim, wherein the metallic sodium changes to liquid at 100 deg. C.

9. The assembly of any preceding claim, wherein the cavity has a rectangular cross-section.

10. The assembly of any preceding claim, wherein the cavity is provided along the length of the torque bar/spline.

11. The assembly of claim 2 or any claim dependent thereon, wherein the heat shield is in the form of a plurality of arcuate panels.

12. The assembly of any preceding claim, wherein the rotating assembly is a wheel assembly.

13. The assembly of any preceding claim, being a wheel and brake assembly of an aircraft.

14. The assembly of claim 13, wherein the rotating assembly is an aircraft wheel assembly and the stator is a part of a landing gear of the aircraft.

## Patentansprüche

1. Rad- und Bremsanordnung, umfassend:
einen Stator;
eine rotierende Baugruppe (40), die um den Stator herum montiert ist und relativ zu diesem um eine Achse A drehbar ist;
ein Drehmomentrohr (20), das fest mit dem Stator verbunden ist;
einen Stapel Bremsscheiben, der um das Drehmomentrohr herum montiert ist, wobei der Stapel Bremsscheiben abwechselnd aus Rotorscheiben (40) und Statorscheiben (50) besteht, wobei die Statorscheiben am Drehmomentrohr und die Rotorscheiben an der rotierenden Baugruppe befestigt sind;
einen Bremsaktuator (60), der so konfiguriert ist, dass er als Reaktion auf einen Bremsbefehl eine Druckkraft auf den Stapel Bremsscheiben ausübt, um einen Reibschluss zwischen den Rotorscheiben und den Statorscheiben zu bewirken, sodass die Statorscheiben die Drehung der Rotorscheiben und somit der rotierenden Baugruppe relativ zum Drehmomentrohr begrenzen;
wobei die Statorscheiben (50) durch eine Vielzahl von Keilwellenverzahnungen (22) um das Drehmomentrohr und eine Vielzahl von Aussparungen (32) in den Statorscheiben, in die die Keilwellenverzahnungen eingreifen, am Drehmomentrohr befestigt sind;
wobei die Rotorscheiben (40) an der rotierenden Baugruppe (10) durch eine Vielzahl von Drehmomentstäben (12) befestigt sind, die sich radial von der rotierenden Baugruppe nach innen erstrecken, und durch eine Vielzahl von Aussparungen (34) in den Rotorscheiben, in die die Drehmomentstäbe eingreifen; und
**dadurch gekennzeichnet, dass**
mindestens eine oder mehrere der Vielzahl von Drehmomentstäben oder eine oder mehrere der Vielzahl von Keilwellenverzahnungen einen darin ausgebildeten Hohlraum aufweist und wobei in dem Hohlraum metallisches Natrium bereitgestellt ist.

2. Die Anordnung nach Anspruch 1, ferner umfassend einen zwischen dem Stator und der rotierenden Baugruppe bereitgestellten Hitzeschild.

3. Die Anordnung nach Anspruch 2, wobei metallisches Natrium in einem Hohlraum im Hitzeschild bereitgestellt ist.

4. Die Anordnung nach einem der vorhergehenden Ansprüche, wobei jeder der Vielzahl von Drehmomentstäben (12') mit einem Hohlraum (600) bereitgestellt ist, in dem metallisches Natrium (700) bereitgestellt ist.

5. Die Anordnung nach einem der Ansprüche 1 bis 3, wobei eine oder einige der Vielzahl von Drehmomentstäben (12') nicht mit einem Hohlraum (600) bereitgestellt sind.

6. Die Anordnung nach einem der vorhergehenden Ansprüche, wobei jeder der Vielzahl von Keilwellenverzahnungen (22') mit einem Hohlraum (300) bereitgestellt ist, in dem metallisches Natrium (400) bereitgestellt ist.

7. Die Anordnung nach einem der Ansprüche 1 bis 5, bei der eine oder einige der Keilwellenverzahnungen nicht mit einem Hohlraum bereitgestellt sind.

8. Die Anordnung nach einem der vorhergehenden Ansprüche, wobei das metallische Natrium bei 100 Grad Celsius in Flüssigkeit übergeht.

9. Die Anordnung nach einem der vorhergehenden Ansprüche, wobei der Hohlraum einen rechteckigen Querschnitt aufweist.

10. Die Anordnung nach einem der vorhergehenden Ansprüche, wobei der Hohlraum entlang der Länge des Drehmomentstabs/der Keilwellenverzahnung bereitgestellt ist.

11. Die Anordnung nach Anspruch 2 oder einem davon abhängigen Anspruch, wobei der Hitzeschild die Form einer Vielzahl gebogener Platten hat.

12. Die Anordnung nach einem der vorhergehenden Ansprüche, wobei die rotierende Baugruppe eine Radanordnung ist.

13. Die Anordnung nach einem der vorhergehenden Ansprüche ist eine Rad- und Bremsanordnung eines Flugzeugs.

14. Die Anordnung nach Anspruch 13, wobei die rotierende Baugruppe eine Flugzeugradanordnung und der Stator Teil eines Fahrwerks des Flugzeugs ist.

## Revendications

1. Ensemble roue et frein comprenant :
un stator ;
un ensemble rotatif (40) monté autour du stator et pouvant tourner par rapport à celui-ci autour d'un axe A ;
un tube de couple (20) en prise fixe avec le stator ;
une pile de disques de frein montée autour du tube de couple, la pile de disques de frein comprenant des disques de rotor (40) et des disques de stator (50) alternés, les disques de stator étant fixés au tube de couple et les disques de rotor fixés à l'ensemble rotatif ;
un actionneur de frein (60) configuré pour, en réponse à une instruction de freinage, appliquer une force de pression sur la pile de disques de frein pour provoquer une prise par frottement entre les disques de rotor et les disques de stator de telle sorte que les disques de stator limitent la rotation des disques de rotor et, par conséquent de l'ensemble rotatif, par rapport au tube de couple ;
dans lequel les disques de stator (50) sont fixés au tube de couple au moyen d'une pluralité de cannelures (22) autour du tube de couple et d'une pluralité d'évidements (32) dans les disques de stator avec lesquels les cannelures viennent en prise ;
dans lequel les disques de rotor (40) sont fixés à l'ensemble rotatif (10) au moyen d'une pluralité de barres de couple (12) se prolongeant radialement vers l'intérieur à partir de l'ensemble rotatif et d'une pluralité d'évidements (34) dans les disques de rotor avec lesquels les barres de couple viennent en prise ; et **caractérisé en ce que**
au moins une ou plusieurs de la pluralité de barres de couple ou une ou plusieurs de la pluralité de cannelures ont une cavité formée à l'intérieur et dans lequel du sodium métallique est fourni dans la cavité.

2. Ensemble selon la revendication 1, comprenant également un bouclier thermique fourni entre le stator et l'ensemble rotatif.

3. Ensemble selon la revendication 2, dans lequel du sodium métallique est fourni dans une cavité dans le bouclier thermique.

4. Ensemble selon une quelconque revendication précédente, dans lequel chacune de la pluralité de barres de couple (12') est dotée d'une cavité (600) dans laquelle du sodium métallique (700) est fourni.

5. Ensemble selon l'une quelconque des revendications 1 à 3, dans lequel une ou plusieurs de la pluralité de barres de couple (12') ne sont pas dotées d'une cavité (600).

6. Ensemble selon une quelconque revendication précédente, dans lequel chacune de la pluralité de cannelures (22') est dotée d'une cavité (300) dans laquelle du sodium métallique (400) est fourni.

7. Ensemble selon l'une quelconque des revendications 1 à 5, dans lequel une ou plusieurs des cannelures ne sont pas dotées de cavité.

8. Ensemble selon une quelconque revendication précédente, dans lequel le sodium métallique se transforme en liquide à 100 degrés C.

9. Ensemble selon une quelconque revendication précédente, dans lequel la cavité a une section transversale rectangulaire.

10. Ensemble selon une quelconque revendication précédente, dans lequel la cavité est fournie sur toute la longueur de la barre de couple/cannelure.

11. Ensemble selon la revendication 2 ou une quelconque revendication dépendant de celle-ci, dans lequel le bouclier thermique se présente sous la forme d'une pluralité de panneaux arqués.

12. Ensemble selon une quelconque revendication précédente, dans lequel l'ensemble rotatif est un ensemble roue.

13. Ensemble selon une quelconque revendication précédente, étant un ensemble roue et frein d'un aéronef.

14. Ensemble selon la revendication 13, dans lequel l'ensemble rotatif est un ensemble roue d'aéronef et le stator fait partie d'un train d'atterrissage de l'aéronef.
